# EUROPEAN PATENT APPLICATION

(11) **EP 2 615 076 A1**
(43) Date of publication of application: **17.07.2013**
(21) Application number: 11871846.9
(22) Date of filing: 04.10.2011
(51) Int. Cl.: C05F 11/00, C05F 11/08, A01C 3/06, B02C 4/18, B02C 4/28

(54) **LIQUID FERTILIZER USING GREEN FORAGE FERMENTATION AND METHOD FOR MANUFACTURING SAME, AND GREEN FORAGE PULVERIZER**

(71) Applicant: Kim, Sang Jun, Jeonbuk 573-809 (KR)
(72) Inventor: Kim, Sang Jun, Jeonbuk 573-809 (KR)
(74) Representative: Engelhard, Markus
(86) International application number: PCT/KR2011/007310
(87) International publication number: WO 2013/051736

(57) **Abstract**

The present invention relates to a fresh grass-fermented liquid fertilizer and a method for manufacturing a fresh grass-fermented liquid fertilizer that is produced by grinding fresh grass into fine particles, without any maturity, and naturally fermenting the fine particles through the cellulose in the fine particles as a substrate, thereby reducing the raw material cost of the fertilizer and the management cost and preventing the oxidization or destruction of various nutrients contained in organic matters. Further, the use of the fresh grass-fermented liquid fertilizer makes the soil activated, allows the growth of the plants to be accelerated, prevents all damages from disease and harmful insects, and treats all amount of fresh grass collected, without having secondary waste.

## Description

### [Technical Field]

The present invention relates to a fresh grass-fermented liquid fertilizer, a method for manufacturing a fresh grass-fermented liquid fertilizer, and a fresh grass grinder, and more particularly, to a fresh grass-fermented liquid fertilizer and a method for manufacturing a fresh grass-fermented liquid fertilizer that is produced by grinding fresh grass into fine particles, without any maturity, and naturally fermenting the fine particles through the cellulose in the fine particles as a substrate, thereby reducing the raw material cost of the fertilizer and the management cost and preventing the oxidization or destruction of various nutrients contained in organic matters, and to a fresh grass grinder that is structured to allow fresh grass components primarily ground through a pair of grinding gears to be freely dropped and secondarily ground through a pair of grinding rollers.

### [Background Art]

In compliance with the requirements of the times for Low Carbon Green Growth and the changes of the recognition on the importance of the environments, recently, there is a definite need for environment preservation. Accordingly, many studies on new fertilizers have been made to prevent the soil pollution and the destruction of natural ecosystem caused by the careless use of chemical fertilizers for producing all kinds of agricultural products.

On the places such as golf courses, sports stadiums, parks and the like where good lawn states are maintained throughout for four seasons, especially, chemical fertilizers and agricultural chemicals are used in large quantities to maintain the lawn state, and further, the quantities of the chemical fertilizers and agricultural chemicals consumed yearly are increased due to the continuous cropping of the lawn. Therefore, eco-friendly replacement fertilizers should be developed and proposed.

Further, the above-mentioned places are used always by general people, unlike the cultivation for general agricultural products, and thus, if the fertilizers and the agricultural chemicals are sprayed in the daytime, many inconveniences are provided to the users. So as to avoid the above problems, if they are sprayed in the nighttime, the management costs are increased due to the addition of workers and the use of the lamps, and since fertilization is conducted by the workers, moreover, it is difficult to spray them uniformly.

Therefore, there is a definite need for the development of replacement materials capable of greatly suppressing the environmental pollution and reducing the raw material costs of the fertilizers and agricultural chemicals, the management costs, and the fertilization costs, and recently, organic fertilizers have been accordingly noted.

Generally, the organic fertilizers are produced through the maturity of various organic materials like animal droppings or the liquids extracted from plants. As the organic materials are at the same time fermented and decayed, however, carbon dioxide, methane gas and so on are unavoidably generated therefrom to cause bad odor. Further, harmful bacteria such as Escherichia coli, Staphylococcus aureus, toxious molds and the like are grown on the organic materials, which makes it hard to cultivate indoor products or plants on parks and golf courses requiring cleanness.

On the other hand, since it is really hard to collect all amounts of lawn byproducts generated generally from the golf courses or parks, they are left out around here and there. The collected portion is matured for a given period of time and is fertilized to garden trees, and alternatively, it is sent and treated appropriately to waste treatment places at a given expense.

More particularly, the lawn byproducts not collected produce the decay layer in the soil and serve as the habitats of all kinds of pathogenic organisms, from which all damages from disease and harmful insects are generated, the emission of ground heat is blocked and hydrophobic is caused to generate partial dry or heavy moisture in the rainy season, the temperature is raised and gas is produced by the heat emission during the decay to make the lawn grow badly or dead, so that so as to avoid the above-mentioned problems, bad circling where the chemical fertilizers and the agricultural chemicals are reused should be needed.

On the other hand, a grinder generally means a machine adapted to grind a given material to particles, which includes a relatively large range of materials and mechanisms. Generally, a grinder for plants has grinding rollers whose outer peripheral surfaces abut against each other to allow dry plants to be passed and ground through the space formed therebetween. At this time, the grinding rollers whose outer peripheral surfaces abut against each other are arranged vertically in plural pairs, so that the primarily ground particles are ground again and again, thereby obtaining a desired particle size.

However, the conventional grinders are generally structured to grind the grains in dry states, and they are not adequate to grind fresh grass having much cellulose. If the fresh grass is ground using the existing grain grinders, it is compressed and decreased to volume, but the cellulose tissues of the fresh grass are not completely ground to produce solid materials therein.

Moreover, the solid cellulose tissues like yarns are likely to enter the gap between the grinding rollers or machines, and the fresh grass leftover entering the gap generates bad smell or provides the environment where microorganisms like molds, bacteria and so on live, which causes very insanitary environments.

### [Disclosure]

### [Technical Problem]

Accordingly, the present invention has been made in view of the above-mentioned problems occurring in the prior art, and it is an object of the present invention to provide a fresh grass-fermented liquid fertilizer and a method for manufacturing a fresh grass-fermented liquid fertilizer that is produced by grinding fresh grass to be generally collected and treated as waste into fine particles, without any maturity, and naturally fermenting the fine particles through the cellulose in the fine particles as a substrate, thereby reducing the raw material cost of the fertilizer and the management cost and producing the eco-friendly fertilizer.

It is another object of the present invention to provide a fresh grass-fermented liquid fertilizer and a method for manufacturing a fresh grass-fermented liquid fertilizer that is capable of conducting automatic folia spraying to lawn grass and agricultural products through the existing irrigation system, thereby effectively reducing the management and fertilization costs thereof.

It is still another object of the present invention to provide a fresh grass grinder that is capable of finely grinding even the cellulose tissues of fresh grass, unlike conventional grinders.

### [Technical Solution]

To accomplish the above objects, according to a first aspect of the present invention, there is provided a method for manufacturing a fresh grass-fermented liquid fertilizer, the method including the steps of: grinding fresh grass to fine particles; and fermenting the ground fine particles of the fresh grass.

According to the present invention, desirably, the fine particles have a size of 0.1mm or less, and the grinding of the fresh grass is conducted by means of a ball mill or a gear type transmission device.

According to the present invention, desirably, the temperature for fermenting the fine particles of the fresh grass is in a range between 28°C and 38°C, and the fermentation of the fine particles of the fresh grass is conducted for 7 days to 10 days. Further, the fermentation of the fine particles of the fresh grass is conducted by means of naturally generated microorganisms through the cellulose in the fine particles as a main substrate, and the fermentation of the fine particles of the fresh grass is accelerated by the addition of effective microorganisms.

According to the present invention, desirably, upon the fermentation of the fine particles of the fresh grass, organic/inorganic waste containing microorganism propagation components is added, and the organic/inorganic waste comprises rice water, waste molasses, or waste shells. Further, the fresh grass is lawn byproducts in golf courses, and the liquid fertilizer is sprayed automatically through an irrigation system.

To accomplish the above objects, according to a second aspect of the present invention, there is provided a fresh grass grinder including: a first grinding part adapted to primarily grind fresh grass engagedly entering the space between a pair of longitudinally inclined roll gears; and a second grinding part adapted to secondarily grind the primarily ground fresh grass in the space between a pair of grinding rollers disposed below the first grinding part in a vertical direction thereof, wherein the first grinding part and the second grinding part are driven at different rotating speeds through separate driving forces supplied thereto, and the amount of the grinding of the fresh grass freely dropped in the vertical directions of the first grinding part and the second grinding part is controlled independently of each other.

According to the present invention, desirably, the first grinding part includes: a first frame forming four side walls; the pair of longitudinally inclined roll gears disposed to face each other in parallel relation to each other along the lengthwise direction of the interior of the first frame; first bearings disposed on the shaft end portions of the pair of longitudinally inclined roll gears so as to allow the pair of longitudinally inclined roll gears to be gently rotated; first bearing guides to which the top and underside of the first bearings are rail-coupled to support the first bearings; first tension units adapted to adjust the gap between the first bearings; and a first power unit adapted to transmit a rotary force to the pair of longitudinally inclined roll gears.

According to the present invention, desirably, the second grinding part includes: a second frame forming four side walls; the pair of grinding rollers disposed to face each other in parallel relation to each other along the lengthwise direction of the interior of the second frame; second bearings disposed on the shaft end portions of the pair of grinding rollers so as to allow the pair of grinding rollers to be gently rotated; second bearing guides to which the top and underside of the second bearings are rail-coupled to support the second bearings; second tension units adapted to adjust the gap between the second bearings; and a second power unit adapted to transmit a rotary force to the pair of grinding rollers.

According to the present invention, desirably, the pair of longitudinally inclined roll gears has gear teeth formed along the lengthwise direction thereof, the gear teeth having an oblique angle from 2 to 5 degrees. At this time, each longitudinally inclined roll gear has a plurality of individual gears coupled in the lengthwise direction thereof. Further, the pair of longitudinally inclined roll gears is rotated alternately forwardly and reversely by means of a separate control unit, and at the time when foreign matters are injected, over load is sensed, so that the supply of the power to the first power unit stops.

According to the present invention, desirably, the first tension unit has a fixing jack adapted to fix the movement of one side longitudinally inclined roll gear and a drive jack adapted to pressurize the movement of the other side longitudinally inclined roll gear. Further, the first power unit has a motor from which power is generated and belts and pulleys adapted to reduce and transmit the rotary force of the motor to the pair of longitudinally inclined roll gears, and the pair of grinding rollers is driven at different rotating speeds from each other.

According to the present invention, desirably, one side grinding roller receives the power from the second power unit, and the pair of grinding rollers is connected to each other by means of speed reduction means, and the speed reduction means is made through the combination of gears mounted on shafts of the pair of grinding rollers. At this time, the rotary speeds of the pair of grinding rollers are 2~3:1.

According to the present invention, desirably, the second tension unit has a fixing jack adapted to fix the movement of one side grinding roller and a drive jack adapted to pressurize the movement of the other side grinding roller. Further, the second power unit has a motor from which power is generated and belts and pulleys adapted to reduce and transmit the rotary force of the motor to the pair of grinding rollers.

### [Advantageous Effects]

According to the present invention, there is provided the fresh grass-fermented liquid fertilizer is produced by grinding fresh grass to be generally collected and treated as waste into fine particles, without any maturity, and naturally fermenting the fine particles through cellulose in the fine particles as a substrate, thereby greatly reducing the raw material cost of the fertilizer and the management cost thereof and producing the eco-friendly fertilizer.

Additionally, the present invention achieves the restoration of soil environments and ecosystem, without the use of pesticides and chemical fertilizers, and the fresh grass-fermented liquid fertilizer is sprayed using the existing irrigation system, thereby providing fresh environments when used for parks, golf courses, and playgrounds and being utilized for the production of eco-friendly agricultural products.

Moreover, the fresh green grinder according to the present invention is capable of finely grinding even the cellulose tissues of the fresh grass, which makes it convenient to perform the post treatments using the ground fresh grass and prevents the cellulose leftover from entering the gap between the parts to provide sanitary effects.

### [Description of Drawings]

FIG.1 is a flowchart showing a procedure for manufacturing and spraying a fresh grass-fermented liquid fertilizer according to the present invention.
FIG.2 is a perspective view showing a fresh grass grinder according to the present invention.
FIG.3 is a perspective view showing the assembling sate of a first grinding part in the fresh grass grinder according to the present invention.
FIG.4 is a perspective view showing the disassembling state of the first grinding part in the fresh grass grinder according to the present invention.
FIG.5 is a perspective view showing a pair of longitudinally inclined roll gears in the fresh grass grinder according to the present invention.
FIG.6 is a sectional view showing the pair of longitudinally inclined roll gears in the fresh grass grinder according to the present invention.
FIG.7 is a perspective view showing the installation structure of first bearings and first tension units in the fresh grass grinder according to the present invention.
FIG.8 is a side view showing the installation structure of the first bearings and the first tension units in the fresh grass grinder according to the present invention.
FIG.9 is a perspective view showing the assembling sate of a second grinding part in the fresh grass grinder according to the present invention.
FIG.10 is a perspective view showing the disassembling sate of the second grinding part in the fresh grass grinder according to the present invention.
FIG.11 is a perspective view showing a pair of grinding rollers in the fresh grass grinder according to the present invention.
FIG.12 is a sectional view showing the pair of grinding rollers in the fresh grass grinder according to the present invention.
FIG.13 is a perspective view showing the installation structure of second bearings and second tension units in the fresh grass grinder according to the present invention.
FIG.14 is a side view showing the installation structure of the second bearings and the second tension units in the fresh grass grinder according to the present invention.
FIG.15 is a graph showing the whole length of pepper according to treatments.
FIG.16 is a graph showing the weights of the above-ground parts and roots of the pepper according to treatments.

### [Best Mode for Invention]

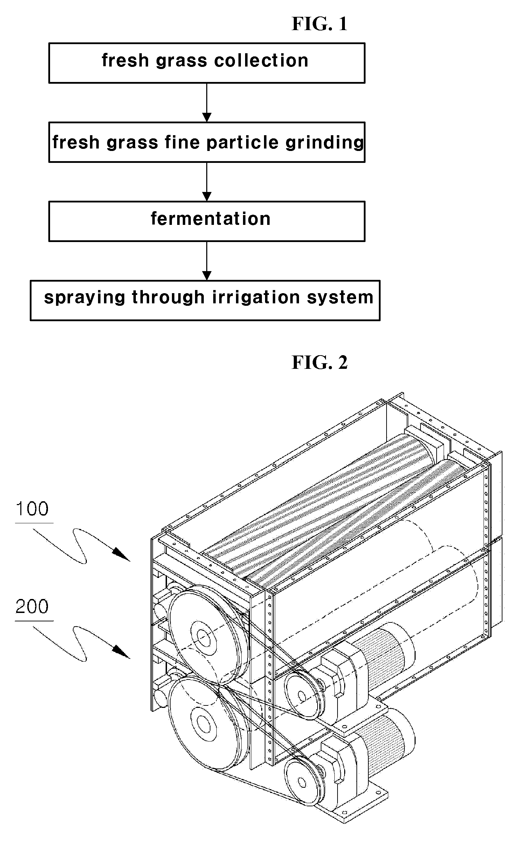

According to the present invention, as shown in FIG.1, there is provided a method for manufacturing a fresh grass-fermented liquid fertilizer, including the steps of: grinding fresh grass to fine particles; and fermenting the ground fine particles of the fresh grass.

The fresh grass like the lawn byproducts generally collected from golf courses or parks is treated as waste or left unattended around here and there. The unattended lawn byproducts produce the decay layer in the soil and also serve as the habitats of all kinds of pathogenic organisms, from which all damages from disease and harmful insects are generated. According to the present invention, the unattended fresh grass is collected and used to minimize the raw material cost of the liquid fertilizer and to reduce an amount of waste.

Unlike the existing organic fertilizers, the collected fresh grass is just ground, without any maturity, and accordingly, the bad smell necessarily generated during the maturity are not generated at all. Further, the grinding process prevents harmful microorganisms such as Escherichia coli, Staphylococcus aureus and the like from living, which makes it adequate to be used for the indoor plant or the lawn on parks and golf courses requiring cleanness.

The grinding process is conducted in various manners, and desirably, the size of the fine particles of the fresh grass is 0.1mm or less. As the fresh grass is ground to the fine particles, the effective components in the fresh grass like inorganic nutrients are effectively liquidized, and the cellulose in the fresh grass is still maintained, thereby allowing effective fermentation to be conducted through the cellulose as a substrate.

That is, the organic matters are fermented, without having any decay, so that the liquid fertilizer in which effective microorganisms are contained can be provided to the soil and plants, while preventing the various nutrients contained in the organic matters from being oxidized or destructed, thereby making the soil activated, allowing the growth of the plants to be accelerated, and preventing all damages from disease and harmful insects. Moreover, all amount of fresh grass collected can be treated without having secondary waste.

For the grinding process of the fresh grass to the fine particles, in case of grinding through blade cutting, grinding to fine particles is possible, but pre-treatment is needed. Further, it is hard to perform continuous grinding, which makes it difficult to treat a large amount of fresh grass. In case of up and down gravity rotary grinding, it is possible to perform continuous grinding, but it is hard to make a mill stone-sized grinder. Further, it is hard to obtain a desired particle size. In case of squeezing grinding through consolidation, liquid and cellulose are separated from each other to cause secondary waste, which needs additional treatment.

So as to perform the continuous fine particle grinding of the fresh grass, accordingly, the fresh grass (lawn byproducts) is desirably ground in a wet process through hydrolysis by using a ball mill in a dry process used generally for grinding minerals.

Alternatively, the fresh grass may be ground under the wet or dry conditions through multistage gears using the engaging force of the gears. So as to optimize the rotating frictional force, at this time, one gear is suppressed in the rotating motion, while the other side gear is engaged with one gear in such a manner as to allow one gear to be forcedly rotated.

On the other hand, the fine particles of the fresh grass make use of the nutrients and cellulose in the fresh grass as the substrate, so that they can be fermented rapidly through the naturally generated microorganisms, without having any additional microorganisms. At this time, effective microorganism EM can be selectively added to accelerate the fermentation of the fine particles.

The fermentation temperature of the fine particles is desirably in a range between 28°C and 38°C, and the fermentation of the fresh grass liquid is desirably conducted for 7 to 10 days. Upon the fermentation of the fine particles of the fresh grass, further, various organic/inorganic waste containing microorganism propagation components is selectively added, and the organic/inorganic waste includes rice water, waste molasses discharged from a plant producing chemical seasonings, waste shells containing calcium, and the like.

The fresh grass-fermented liquid fertilizer is applicable to environments where various plants can be cultivated, and desirably to the golf courses where the lawn byproducts can be periodically generated and the fertilizer supply and management be needed for the duration of the four seasons.

Further, the fresh grass-fermented liquid fertilizer is automatically mixed and eluted with water supplied from the existing irrigation system to a given ratio therebetween, and the folia spray of the eluted liquid fertilizer is automatically applied to the grass and agricultural products, thereby effectively reducing the management and fermentation costs and conducting uniform fermentation.

FIG.2 is a perspective view showing a fresh grass grinder according to the present invention. As shown in FIG.2, a fresh grass grinder according to the present invention largely includes a first grinding part 100 and a second grinding part 200. The first grinding part 100 is configured to allow the fresh grass entering the space between a pair of longitudinally inclined roll gears 120 to be primarily ground. The second grinding part 200 is configured to allow the primarily ground fresh grass to be secondarily ground in the space between a pair of grinding rollers 220 disposed below the first grinding part 100 in a vertical direction thereof.

The first grinding part 100 and the second grinding part 200 are driven at different rotating speeds through separate driving forces supplied thereto, and the amount of the grinding of the fresh grass freely dropped in the vertical directions of the first grinding part 100 and the second grinding part 200 can be controlled independently of each other.

For example, if the sizes of the power supplied to the first grinding part 100 and the second grinding part 200 are the same each other, the first grinding part 100 is rotated in the reduction ratio to the supplied power of 60:1, and the second grinding part 200 is rotated in the reduction ratio to the supplied power of 20:1.

That is, since the first grinding part 100 requires a relatively large force in the initial grinding of the fresh grass, it is rotated at a relatively slow speed, while having more strengthened grinding force. Contrarily, since the second grinding part 200 requires a relatively smaller force in the grinding of the fresh grass than the first grinding part 100, it is rotated at a relatively fast speed, thereby allowing the cellulose tissues to be ground to the fine particles.

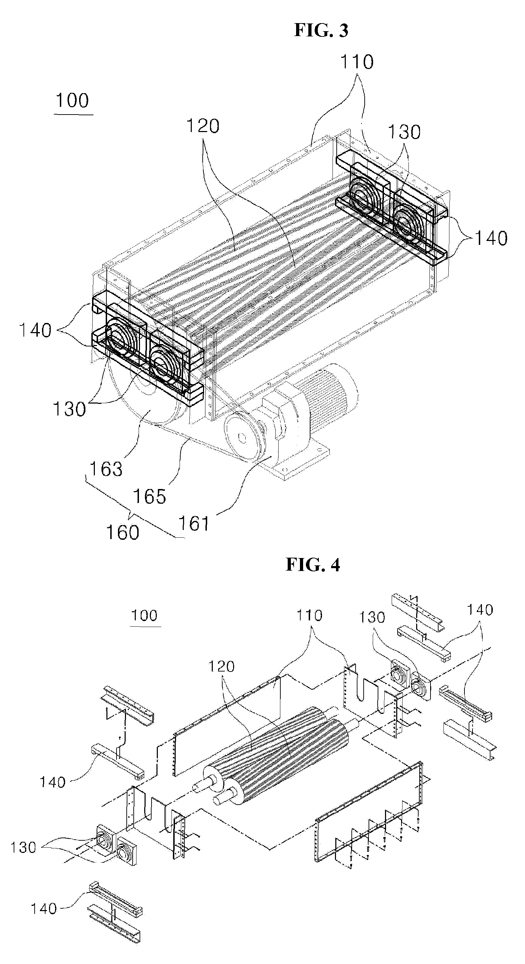

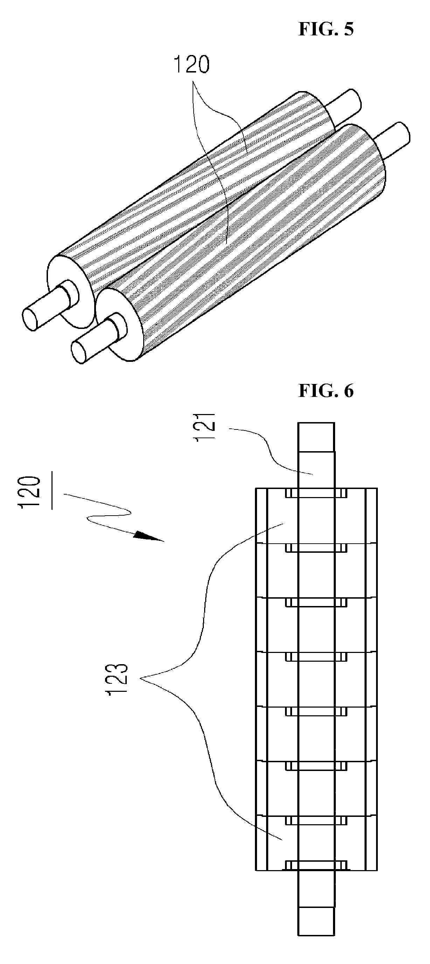

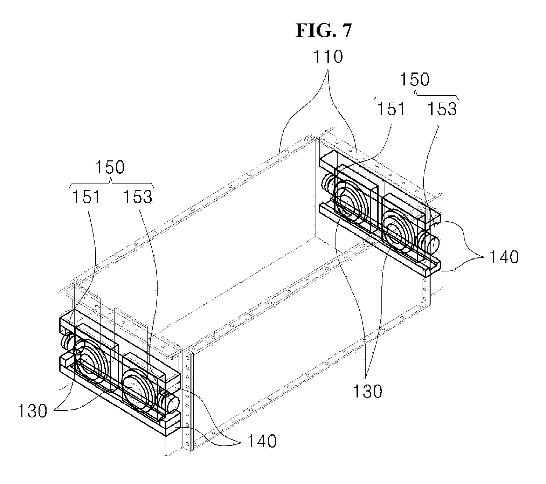

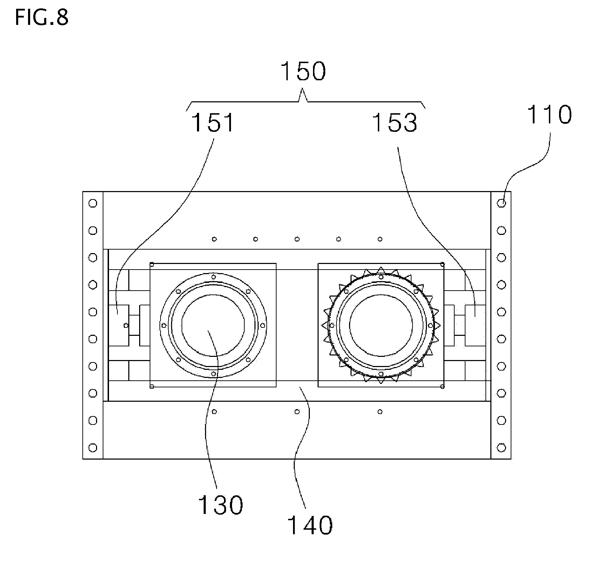

FIG.3 is a perspective view showing the assembling sate of a first grinding part in the fresh grass grinder according to the present invention, FIG.4 is a perspective view showing the disassembling state of the first grinding part in the fresh grass grinder according to the present invention, FIG.5 is a perspective view showing a pair of longitudinally inclined roll gears in the fresh grass grinder according to the present invention, FIG.6 is a sectional view showing the longitudinally inclined roll gears in the fresh grass grinder according to the present invention, FIG.7 is a perspective view showing the installation structure of first bearings and first tension units in the fresh grass grinder according to the present invention, and FIG.8 is a side view showing the installation structure of the first bearings and the first tension units in the fresh grass grinder according to the present invention.

Referring to FIGS.3 to 8, the first grinding part 100 according to the present invention largely includes a first frame 110, the pair of longitudinally inclined roll gears 120, first bearings 130, first bearing guides 140, first tension units 150, and a first power unit 160.

The first frame 110 forms four side walls and has the pair of longitudinally inclined roll gears 120 mounted at the inside thereof, while having the first bearings 130, the first bearing guides 140, the first tension units 150, and the first power unit 160 disposed at the outside thereof to support and drive the pair of longitudinally inclined roll gears 120.

The pair of longitudinally inclined roll gears 120 is disposed to face each other in parallel relation to each other along the lengthwise direction of the interior of the first frame 110, and it has gear teeth formed along the lengthwise direction thereof, the gear teeth having an oblique angle from 2 to 5 degrees.

The pair of longitudinally inclined roll gears 120 is rotated in such a manner where both side gear teeth are engaged with each other in a shape of V when viewed on the plane, and the fresh grass is pushed and moved by means of the engaged V-shaped angle, thereby preventing the fresh grass from staying and gathering between the teeth and further reversing and mixing the fresh grass to enhance the grinding efficiency.

At this time, desirably, the gear teeth have the oblique angle in a range between 2 degrees and 5 degrees, which prevents the moving speed of the fresh grass from being faster than the grinding speed thereof. Further, each of the pair of longitudinally inclined roll gears 120 has a plurality of individual gears 123 coupled to a gear shaft 121 in the lengthwise direction thereof. The number of individual gears 123 is approximately 6 to 8.

Also, the first bearings 130 are disposed on the shaft end portions of the pair of longitudinally inclined roll gears 120 so as to allow the pair of longitudinally inclined roll gears 120 to be gently rotated, and they are rail-coupled between the first bearing guides 140 in such a manner as to be movable to adjust the separation distance between the rotary shafts.

One pair of first bearing guides 140 surrounds the top and underside of the first bearings 130 to restrict the up and down movements of the first bearings 130, while supporting the first bearings 130 in such a manner as to allow the first bearings 130 to be movable between the rotary shafts.

Further, the first tension unit 150 is adapted to adjust the gap between the first bearings 130 and has a fixing jack 151 adapted to fix the movement of one side longitudinally inclined roll gear 120 and a drive jack 153 adapted to pressurize the movement of the other side longitudinally inclined roll gear 120. At this time, the drive jack 153 is operated through the pressure applied from a separate hydraulic device.

Further, the first power unit 160 is adapted to transmit a rotary force to the pair of longitudinally inclined roll gears 120 and has a motor 161 from which power is generated and belts 163 and pulleys 165 adapted to reduce and transmit the rotary force of the motor 161 to the pair of longitudinally inclined roll gears 120.

At this time, the pair of longitudinally inclined roll gears 120 is rotated alternately forwardly and reversely by means of a separate control unit (not shown), and at the time when foreign matters are injected, over load is sensed, so that the supply of the power to the first power unit 160 stops.

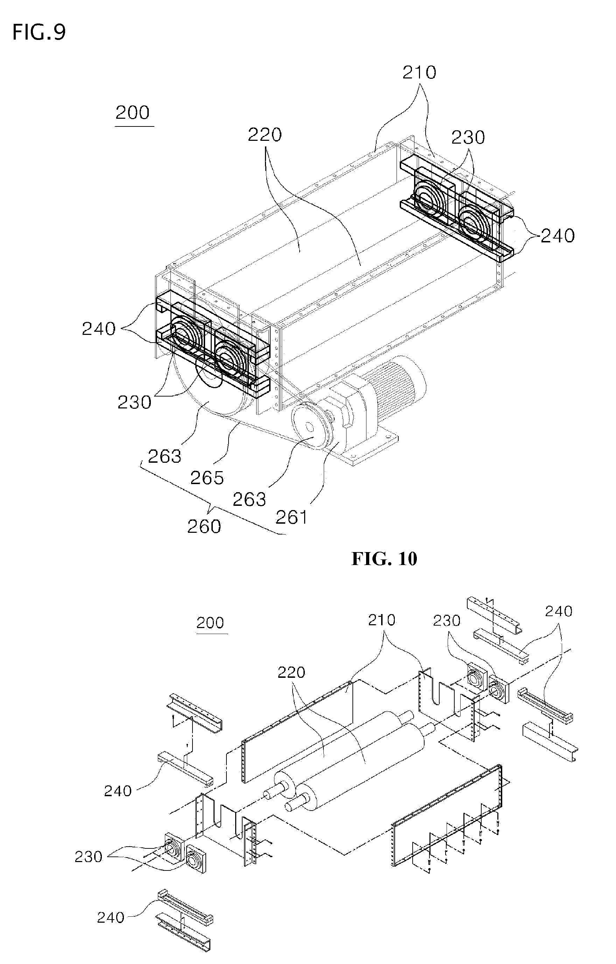

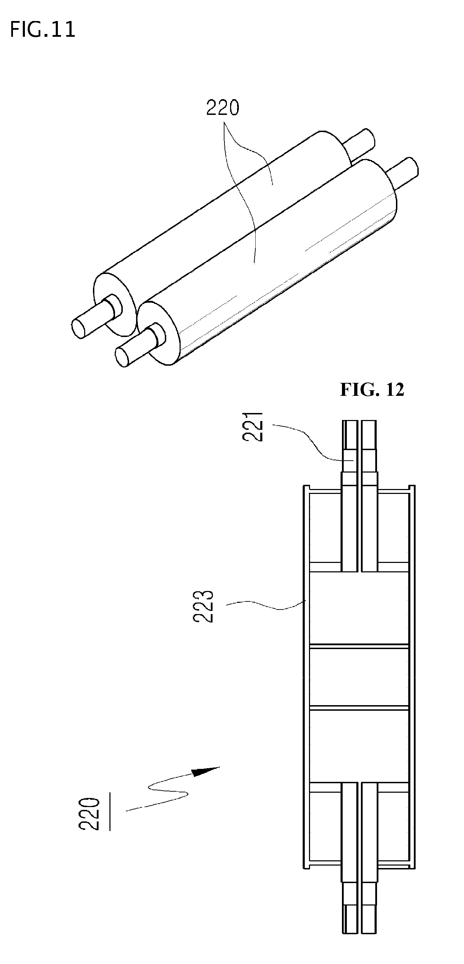

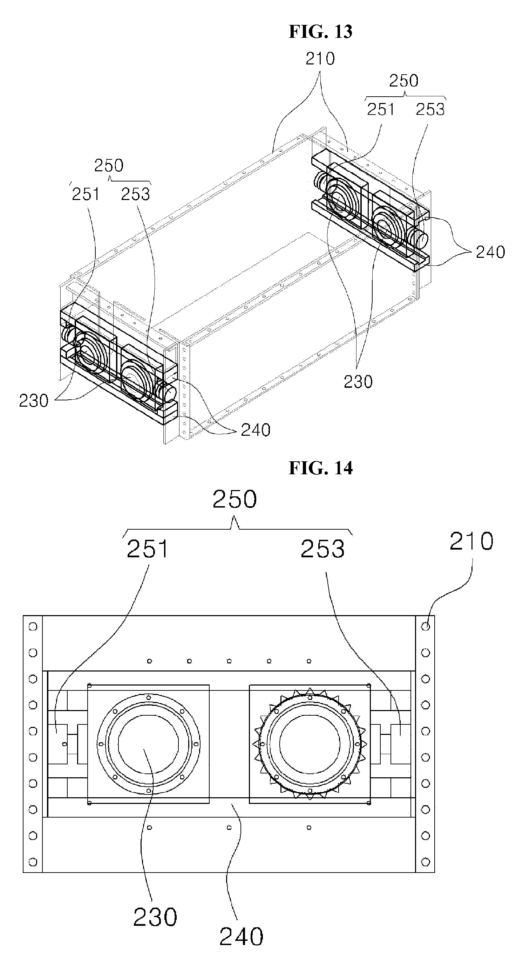

FIG.9 is a perspective view showing the assembling sate of a second grinding part in the fresh grass grinder according to the present invention, FIG.10 is a perspective view showing the disassembling sate of the second grinding part in the fresh grass grinder according to the present invention, FIG.11 is a perspective view showing grinding rollers in the fresh grass grinder according to the present invention, FIG.12 is a sectional view showing the grinding rollers in the fresh grass grinder according to the present invention, FIG.13 is a perspective view showing the installation structure of second bearings and second tension units in the fresh grass grinder according to the present invention, and FIG.14 is a side view showing the installation structure of the second bearings and the second tension units in the fresh grass grinder according to the present invention.

Referring to FIGS.9 to 14, the second grinding part 100 according to the present invention largely includes a second frame 210, the pair of grinding rollers 220, second bearings 230, second bearing guides 240, second tension units 250, and a second power unit 260.

The second frame 210 forms four side walls and has the pair of grinding rollers 220 mounted at the inside thereof, while having the second bearings 230, the second bearing guides 240, the second tension units 250, and the second power unit 260 disposed at the outside thereof to support and drive the pair of grinding rollers 220.

The pair of grinding rollers 220 is disposed to face each other in parallel relation to each other along the lengthwise direction of the interior of the second frame 110, and it is driven at different rotating speeds from each other. One side grinding roller 220 receives the power from the second power unit 260, and the pair of grinding rollers 220 is connected to each other by means of speed reduction means.

At this time, the speed reduction means is made through the combination of gears mounted on shafts 221 of the pair of grinding rollers 220. Of course, the speed reduction means is made through the combination of a belt and a pulley or through a structure having the equivalent action and effect thereto.

The rotary speeds of the pair of grinding rollers 220 are 2~3:1. At this time, the friction between the pair of grinding rollers 220 may be generated due to the speed difference between the rollers 220, and the ground fresh grass injected into the place where the friction is generated is mixed and frictionally ground. That is, the pair of grinding rollers 220 pulls the cellulose tissues of the fresh grass from both sides thereof in the opposite direction to each other, thereby allowing the cellulose tissues to be forcedly torn off and fractured. When compared with the existing simple compression manner, the fresh grass grinder according to the present invention enables the cellulose tissues of the fresh grass to be ground to fine particles.

So as to cool the frictional heat, at this time, each grinding roller 220 has a hollow body 223 through which the shaft 221 is passed, and air cooling and liquid cooling are performed through the shaft 221.

The pair of grinding rollers 220 is rotated in different speeds from each other, so that the fresh grass ground primarily through the first grinding part 100 is frictionally mixed at a high speed to allow the cellulose tissues thereof to be ground to the fine particles.

Also, the second bearings 230 are disposed on the shaft end portions of the pair of grinding rollers 220 so as to allow the pair of grinding rollers 220 to be gently rotated, and they are rail-coupled between the second bearing guides 240 in such a manner as to be movable between the rotary shafts. One pair of second bearing guides 240 surrounds the top and underside of the second bearings 230 to restrict the up and down movements of the second bearings 230, while supporting the second bearings 230 in such a manner as to allow the second bearings 230 to be movable between the rotary shafts.

Further, the second tension unit 250 is adapted to adjust the gap between the second bearings 230 and has a fixing jack 251 adapted to fix the movement of one side grinding roller 220 and a drive jack 253 adapted to pressurize the movement of the other side grinding roller 220. At this time, the drive jack 253 is operated through the pressure applied from a separate hydraulic device.

Further, the second power unit 260 is adapted to transmit a rotary force to the pair of grinding rollers 220 and has a motor 261 from which power is generated and belts 263 and pulleys 265 adapted to reduce and transmit the rotary force of the motor 261 to the pair of grinding rollers 220.

Under the above-mentioned configuration, the fresh grass grinder according to the present invention is capable of finely grinding even the cellulose tissues of the fresh grass, which makes it convenient to perform the post treatments using the ground fresh grass and prevents the cellulose leftover from entering the gap between the parts to provide sanitary effects.

Hereinafter, an explanation on the methods for grinding and fermenting the fresh grass for manufacturing the liquid fertilizer according to the present invention will be given. However, the present invention is not to be restricted by the embodiments but only by the appended claims, and it is to be appreciated that those skilled in the art can change or modify the embodiments without departing from the scope and spirit of the present invention.

### [First Embodiment] Manufacturing the fresh grass-fermented liquid fertilizer and the spraying effects to lawn

### 1. Grinding step

Fresh grass was ground to fine particles having a size of 0.1mm or less through the fresh grass grinder according to the present invention.

### 2. Fermenting step

The fine particles of the fresh grass were put into a concrete tank whose inner walls were coated with an eco-friendly material, polyurea, and a temperature was maintained to at least 30 degrees or more through heating coils, while being agitated in every direction through an agitator. Next, the fine particles of the fresh grass were fermented for 7 days to 10 days in an anaerobic state.

The fresh grass was fermented through naturally generated microorganisms, and food waste, rice water, shells and the like as additives were injected during the grinding process of the fresh grass. Alternatively, waste molasses as amino acid byproducts were added during the fermenting process, and the amounts of N-P-K were adjusted to have 3g/L in a ratio of 21-17-17.

### 3. Lawn spraying of liquid fertilizer

Since the amounts of components required in accordance with the growing period (spring and fall) and lag period (summer and winter) of the lawn are different, the ratio of the fresh grass-fermented liquid and water was 1:125, and the liquid fertilizer mixed with water was sprayed everyday for 10 minutes, during the growing period. During the lag period, the liquid fertilizer was diluted 500 times to 1,000 times and then sprayed every other day for 5 minutes.

Through the steps of manufacturing and spraying the fresh grass-fermented liquid fertilizer, it was found that the raw material cost of the liquid fertilizer and a management cost are substantially reduced since chemical fertilizers are not used, the growth of the plants is accelerated, and various advantages such as the improvement of soil fertility, the purification of polluted soil, the purification of agricultural water, the decrease of all damages from disease and harmful insects and bad smell and the like are provided.

### [Second Embodiment] Manufacturing the fresh grass-fermented liquid fertilizer to which fermentation microorganisms are mixed

### 1. Isolation of microorganisms

Soil was collected from seashore and eluted with sterile distilled water, and the eluted liquid of 100L was smeared in a chitin agar medium (0.5% swollen chitin, 2g Na2HPO4, 1g KH2PO4, 0.5g NaCl, 1g NH4Cl, 0.5g MaSO4.7H2O, 0.5g CaCl2.H2O, 20g agar, and 1L distilled water). Next, incubation was conducted at 30°C for 5 to 7 days and the microorganisms (*Paenibacillus ehimensis* KWN38) forming a halo zone around a colony by means of the decomposition of chitin were selected.

### 2. Inoculation of microorganisms

1.5g/L chitin was added to the fresh grass-fermented liquid fertilizer produced in the first embodiment, and the inoculation of the isolated microorganisms was conducted. Next, the microorganisms were cultivated at 170rpm and 30°C for 5 days.

### [First and Second Comparison Examples] Manufacturing fertilizer treatment and fertilizer and agricultural chemical treatment

A fertilizer treatment (first comparison example) was prepared by adding 3g 21-17-17 complex fertilizer to 1L water, and a fertilizer and agricultural chemical treatment (second comparison example) was prepared by adding to 1L water 3g 21-17-17 complex fertilizer and 1g agricultural chemical-effective components: Dimethomorph+Pyraclostrobin 17.6% (11.3+6.3) published by Dongbang Agro cooperation.

### [Experimental example] Biological control effect experiment for pepper phytophthora blight

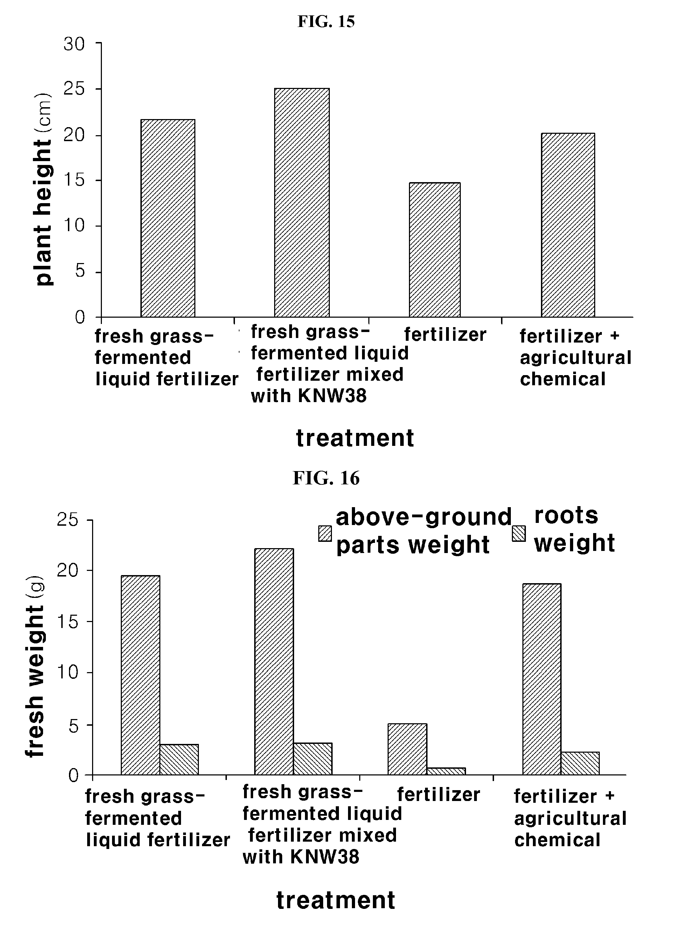

The fertilizers according to the first and second embodiments and the first and second comparison examples were sprayed to peppers, and phytophthora capsici was inoculated to the peppers. After three weeks, next, sampling for the peppers by example was conducted to measure the plant heights, fresh weights and root weights, so that the results were shown in FIGS.15 and 16.

As shown, in the plant heights, the fresh grass-fermented liquid fertilizer treatment to which the microorganisms are mixed showed the highest plant height, and contrarily, the fertilizer treatment showed the lowest plant height. In the fresh weights, the fresh grass-fermented liquid fertilizer treatment to which the microorganisms are mixed and the fertilizer and agricultural chemical treatment did not show a statistically large difference but had heavier weights than the fertilizer treatment. The fresh grass-fermented liquid fertilizer treatment to which the microorganisms are mixed showed the heaviest root weight therein.

To the contrary, the fertilizer treatment showed the lowest growth, which was caused by the damage generated from the phytophthora capsici. On the other hand, the fertilizer and agricultural chemical treatment showed the growth results having the intermediate value between the fresh grass-fermented liquid fertilizer treatment to which the microorganisms are mixed and the fertilizer treatment.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A method for manufacturing a fresh grass-fermented liquid fertilizer, the method comprising the steps of:
grinding fresh grass to fine particles; and fermenting the ground fine particle of the fresh grass.

2. The method for manufacturing a fresh grass-fermented liquid fertilizer according to claim 1, wherein the fine particles have a size of 0.1mm or less.

3. The method for manufacturing a fresh grass-fermented liquid fertilizer according to claim 1, wherein the grinding of the fresh grass is conducted by means of a ball mill.

4. The method for manufacturing a fresh grass-fermented liquid fertilizer according to claim 1, wherein the grinding of the fresh grass is conducted by means of a gear type transmission device.

5. The method for manufacturing a fresh grass-fermented liquid fertilizer according to claim 1, wherein the temperature for fermenting the fine particles of the fresh grass is in a range between 28°C and 38°C.

6. The method for manufacturing a fresh grass-fermented liquid fertilizer according to claim 1, wherein the fermentation of the fine particles of the fresh grass is conducted for 7 days to 10 days.

7. The method for manufacturing a fresh grass-fermented liquid fertilizer according to claim 1, wherein the fermentation of the fine particles of the fresh grass is conducted by means of naturally generated microorganisms through the cellulose in the fine particles as a main substrate.

8. The method for manufacturing a fresh grass-fermented liquid fertilizer according to claim 7, wherein the fermentation of the fine particles of the fresh grass is accelerated by the addition of effective microorganisms.

9. The method for manufacturing a fresh grass-fermented liquid fertilizer according to claim 1, wherein upon the fermentation of the fine particles of the fresh grass, organic/inorganic waste containing microorganism propagation components is added.

10. The method for manufacturing a fresh grass-fermented liquid fertilizer according to claim 9, wherein the organic/inorganic waste comprises rice water, waste molasses, or waste shells.

11. The method for manufacturing a fresh grass-fermented liquid fertilizer according to claim 1, wherein the fresh grass is lawn byproducts in golf courses.

12. The fresh grass-fermented liquid fertilizer produced through the method as defined in any one of claims 1 to 11.

13. The fresh grass-fermented liquid fertilizer according to claim 12, wherein the liquid fertilizer is sprayed automatically through an irrigation system.

14. A fresh grass grinder comprising:
a first grinding part 100 adapted to primarily grind fresh grass engagedly entering the space between a pair of longitudinally inclined roll gears 120; and
a second grinding part 200 adapted to secondarily grind the primarily ground fresh grass in the space between a pair of grinding rollers 220 disposed below the first grinding part 100 in a vertical direction thereof,
wherein the first grinding part 100 and the second grinding part 200 are driven at different rotating speeds through separate driving forces supplied thereto, and the amount of the grinding of the fresh grass freely dropped in the vertical directions of the first grinding part 100 and the second grinding part 200 is controlled independently of each other.

15. The fresh grass grinder according to claim 14, wherein the first grinding part 100 comprises: a first frame 110 forming four side walls; the pair of longitudinally inclined roll gears 120 disposed to face each other in parallel relation to each other along the lengthwise direction of the interior of the first frame 110; first bearings 130 disposed on the shaft end portions of the pair of longitudinally inclined roll gears 120 so as to allow the pair of longitudinally inclined roll gears 120 to be gently rotated; first bearing guides 140 to which the top and underside of the first bearings 130 are rail-coupled to support the first bearings 130; first tension units 150 adapted to adjust the gap between the first bearings 130; and a first power unit 160 adapted to transmit a rotary force to the pair of longitudinally inclined roll gears 120.

16. The fresh grass grinder according to claim 14, wherein the second grinding part 200 comprises: a second frame 210 forming four side walls; the pair of grinding rollers 220 disposed to face each other in parallel relation to each other along the lengthwise direction of the interior of the second frame 210; second bearings 230 disposed on the shaft end portions of the pair of grinding rollers 220 so as to allow the pair of grinding rollers 220 to be gently rotated; second bearing guides 240 to which the top and underside of the second bearings 230 are rail-coupled to support the second bearings 230; second tension units 250 adapted to adjust the gap between the second bearings 230; and a second power unit 260 adapted to transmit a rotary force to the pair of grinding rollers 220.

17. The fresh grass grinder according to any one of claims 14 to 16, wherein the pair of longitudinally inclined roll gears 120 has gear teeth formed along the lengthwise direction thereof, the gear teeth having an oblique angle from 2 to 5 degrees.

18. The fresh grass grinder according to claim 17, wherein each longitudinally inclined roll gear 120 has a plurality of individual gears 123 coupled in the lengthwise direction thereof.

19. The fresh grass grinder according to any one of claims 14 to 16, wherein the pair of longitudinally inclined roll gears 120 is rotated alternately forwardly and reversely by means of a separate control unit, and at the time when foreign matters are injected, over load is sensed, so that the supply of the power to the first power unit 160 stops.

20. The fresh grass grinder according to claim 15, wherein the first tension unit 150 has a fixing jack 151 adapted to fix the movement of one side longitudinally inclined roll gear 120 and a drive jack 153 adapted to pressurize the movement of the other side longitudinally inclined roll gear 120.

21. The fresh grass grinder according to claim 15, wherein the first power unit 160 has a motor 161 from which power is generated and belts 163 and pulleys 165 adapted to reduce and transmit the rotary force of the motor 161 to the pair of longitudinally inclined roll gears 120.

22. The fresh grass grinder according to any one of claims 14 to 16, wherein the pair of grinding rollers 220 is driven at different rotating speeds from each other.

23. The fresh grass grinder according to claim 22, wherein one side grinding roller 220 receives the power from the second power unit 260, and the pair of grinding rollers 220 is connected to each other by means of speed reduction means.

24. The fresh grass grinder according to claim 23, wherein the speed reduction means is made through the combination of gears mounted on shafts 221 of the pair of grinding rollers 220.

25. The fresh grass grinder according to claim 23, wherein the rotary speeds of the pair of grinding rollers 220 are 2~3:1.

26. The fresh grass grinder according to claim 16, wherein the second tension unit 250 has a fixing jack 251 adapted to fix the movement of one side grinding roller 220 and a drive jack 253 adapted to pressurize the movement of the other side grinding roller 220.

27. The fresh grass grinder according to claim 16, wherein the second power unit 260 has a motor 261 from which power is generated and belts 263 and pulleys 265 adapted to reduce and transmit the rotary force of the motor 261 to the pair of grinding rollers 220.
